# EUROPÄISCHE PATENTSCHRIFT

(11) **EP 0 594 048 B1**
(45) Veröffentlichungstag und Bekanntmachung des Hinweises auf die Patenterteilung: **22.01.1997**
(21) Anmeldenummer: 93116550.0
(22) Anmeldetag: 13.10.1993
(51) Int. Cl.: H01M 8/12

(54) **Brennstoffzellträger**
Fuelcell support
Support de pile à combustible

(30) Priorität: 23.10.1992 DE 4235729
(43) Veröffentlichungstag der Anmeldung: 27.04.1994
(73) Patentinhaber: CeramTec AG Innovative Ceramic Engineering, 73207 Plochingen (DE)
(72) Erfinder: Heinl, Roland, D-95615 Marktredwitz (DE); Schröter, Peter, D-95632 Wunsiedel (DE)

(56) Entgegenhaltungen:
- EP-A- 0 387 643
- EP-A- 0 424 814
- EP-A- 0 452 737
- EP-A- 0 507 977
- DE-A- 4 033 284
- DE-A- 4 203 245
- US-A- 3 525 646
- JOURNAL OF THE CERAMIC SOCIETY OF JAPAN, INTERNATIONAL EDITION Bd. 100, Nr. 6 , Juni 1992 , TOKYO JP Seiten 838 - 841 TATSUYA KAWADA ET AL 'Fabrication of a Planar Solid Oxide Fuel Cell by Tape-Casting and Co-firing Method'
- PROCEEDINGS OF THE 24TH INTERSOCIETY ENERGY CONVERSION ENGINEERING CONFERENCE 6-11 AUGUST 1989 WASHINGTON Bd. 3 , 1989 , NEW YORK Seiten 1547 - 1551 M. DOKIYA ET AL 'FABRICATION OF A PLANAR SOLID OXIDE FUEL CELL'

## Beschreibung

Die vorliegende Erfindung bezieht sich auf ein Trägermaterial für eine Brennstoffzelle. Unter einer Brennstoffzelle soll im Rahmen der vorliegenden Erfindung eine elektrochemische Vorrichtung zur direkten Umwandlung der chemischen Energie eines Brennstoffes in elektrische Energie verstanden werden. Die Brennstoffzellentechnologie verspricht beträchtlich höhere Wirkungsgrade und vor allem einen wesentlichen gesenkten Schadstoffausstoß im Vergleich zur konventionellen Stromerzeugung.

Ein bekannter Brennstoffzellentyp ist die Festoxidbrennstoffzelle (SOFC). Der Festelektrolyt ist dabei Yttrium-dotiertes Zirkonoxid auf dessen Oberflächen jeweils Elektroden aufgebracht sind. Bei der Betriebstemperatur von etwa 1000 °C wandern innerhalb des Kristallgitters Sauerstoffionen über Sauerstoffleerstellen und führen so zu einer Spannung.

Da sowohl der Festelektrolyt als auch die Elektroden üblicherweise nur eine geringe Dicke in der Größenordnung von 10 bis 250 µm besitzen, benötigt dieser Brennstoffzellentyp zur mechanischen Stabilisierung üblicherweise einen Träger. Die Ausbildung dieses Trägers ist bereits mehrfach beschrieben worden.

Die EP-A-55 016 beschreibt einen bevorzugt rohrförmigen Träger aus porösem kalziumstabilisierten Zirkonoxid. Obwohl dieser Träger im wesentlichen die technischen Anforderungen erfüllt, besteht sein Nachteil darin, daß Zirkonoxid ein vergleichsweise teurer Rohstoff ist.

Die EP-A-286 360 beschreibt eine Brennstoffzelle, bei der die Trägerkeramik durch einen tragfähigen Aufbau bevorzugt aus Strontium-dotiertem LaMnO₃ ersetzt ist. Dieser Aufbau zeigt Vorteile hinsichtlich des Stromflusses, der thermischen Anpassung und hinsichtlich von Diffusionsvorgängen. Ebenso wie Zirkonoxid zählt aber Strontium-dotiertes LaMnO₃ zu den vergleichsweise teureren Materialien. Ferner muß einer möglichen toxischen Wirkung von Schwermetallverbindungen bei der Herstellung, dem Betrieb und insbesondere der Entsorgung von Massengütern immer mehr Rechnung getragen werden.

Weiterhin wird nach der Lehre der EP-A-454 095 eine Träger-Keramik aus porösem Al₂O₃ bereitgestellt. Da die aktive Einheit bestehend aus Festelektrolyt und Elektroden einen thermischen Ausdehnungskoeffizienten (WAK) von etwa 11·10⁻⁶ K⁻¹ besitzen und die bestimmungsgemäße Betriebstemperatur der Brennstoffzelle etwa 1000 °C beträgt, kommt es bei der Verwendung der Al₂O₃-Träger (WAK ≈ 8·10⁻⁶ K⁻¹) zu thermisch induzierten Spannungen, die häufig zum Versagen der Bauteile führen.

Die DE-A-40 09 138 versucht das Problem der unterschiedlichen Ausdehnungskoeffizienten durch die Verwendung von speziellen Metallegierungen zu lösen. Metallegierungen besitzen aber im Vergleich zu Keramik eine weitaus schlechtere Hochtemperaturbeständigkeit und höhere Neigung zu Korrosion und Legierungsbildung (Diffusion).

Die DE-A 42 03 245 offenbart eine Träger-Keramik mit (100-A) Mol% MgO und A Mol% MgAl₂O₄, wobei A von 14-64 reicht. Alternativ wird ein Bereich von (100-x) Mol% MgO und x Mol% Al₂O₃, wobei x von 7.32 reicht, angegeben. Für den Wärmeausdehnungskoeffizienten wird ein optimaler Bereich von 9.5 x 10⁻⁶ °C⁻¹ bis 11.5 x 10⁻⁶ °C⁻¹ genannt.

Die Aufgabe der vorliegenden Erfindung war es also, für die Brennstoffzellentechnik ein keramisches Trägermaterial mit hohen thermischen Ausdehnungskoeffizienten, hoher Korrosionsbeständigkeit und Temperaturbeständigkeit und guter chemischer Verträglichkeit mit den Umgebungsmedien bereitzustellen. Ferner erfordert die Wirtschaftlichkeit einen möglichst preisgünstigen Werkstoff.

Gelöst wird diese Aufgabe durch eine Brennstoffzelle aus mehreren miteinander verschalteten aktiven Einheiten und wenigstens einem keramischen Träger, dadurch gekennzeichnet, daß der Träger einen thermischen Ausdehnungskoeffizienten im Bereich von 9 bis 13·10⁻⁶ K⁻¹, gemessen im Temperaturbereich zwischen 20 - 1000 °C, besitzt und daß er eine Menge von 35 bis 80 Gew.-% MgO, von 20 bis 65 Gew.-% Al₂O₃ und von 0 bis 15 Gew.-% Verunreinigungen und/oder weitere anorganische Zuschlagstoffe enthält, wobei er eine offene Porosität von 53-80% und Porenverteilungshänfigkeitsmaxima zwischen 0.2 und 5 µm, zwischen 10 und 40 µm und/oder zwischen 50 und 150 µm aufweist.

Die aktive Einheit der Brennstoffzelle umfaßt dabei bevorzugt eine Festelektrolytschicht, die aus stabilisiertem Zirkondioxid aufgebaut sein kann und die auf der Anodenseite bevorzugt mit einer Schicht aus einem ternären Gemisch aus Nickel, Zirkondioxid und Cer, auf der Kathodenseite bevorzugt mit einer strontiumdotierten Schicht aus LaMnO₃ belegt ist. Weil die bevorzugte Ausführungsform der aktiven Einheit der Brennstoffzelle mit Schichtdicken im Bereich von 10 bis 250 µm auskommt, erfordern das Handling und der Einbau dieser aktiven Einheit auf jeden Fall eine mechanische Stabilisierung.

Der erfindungsgemäße Träger kann in planarer Bauweise ausgeführt und beispielsweise in Anlehnung an die Lehre der DE-A-40 09 138 beschaltet werden. Eine alternative Ausführungsform des erfindungsgemäßen Trägers besitzt zylindrische Form und kann beispielsweise in Anlahnung an die Lehre der EP-A-55 016 beschaltet werden. Prinzipiell sind aber auch andere Geometrien wie z. B. ein zellenartiger Aufbau oder ein Aufbau mit stabilisierenden Einbauten möglich.

Thermische Ausdehnungskoeffizienten von unter 9·10⁻⁶ K⁻¹ führen im Verbund mit stabilisiertem Zirkonoxid zu thermisch-induzierten Spannungen, die bis zum Bruch von Trägern oder aktiven Einheiten führen können.

Thermische Ausdehnungskoeffizienten von über 13·10⁻⁶ K⁻¹ führen zu Zugspannungen und Brüchen in der Trägerkeramik. Die Trägerkeramik kann ohne offene Porosität, aber mit makroskopischen Durchbrüchen wie beispielsweise runden Bohrungen oder rechteckigen Aussparungen ausgeführt werden. In diesem Fall sind hohe Materialfestigkeiten aber auch hohe E-Moduli realisierbar. Für Werkstoffverbunde werden niedrige E-Moduli angestrebt, damit auftretende Spannungen durch elastisches Verhalten schädigungsfrei überstanden werden können. Die Trägerkeramik kann aber auch in poröser Form ausgeführt werden, wobei die Art der Porosität (Porendurchmesser, Porenverteilung, Porenform) gezielt einstellbar ist. Große Porendurchmesser führen dabei zu erhöhter Gasdurchlässigkeit aber auch sinkender Festigkeit. Poröse Trägerkeramiken besitzen deutlich niedrigere E-Moduli als dichte Trägerkeramiken und versorgen die aktive Einheit homogener mit Gasen.

Es hat ist erforderlich, daß der erfindungsgemäße Brennstoffzellenträger eine anisotrope Porenverteilung aufweist, bei der ein erstes Porenverteilungshäufigkeitsmaximum im Bereich von 0,2 bis 5 µm und ein zweites Porenverteilungshäufigkeitsmaximum im Bereich zwischen 10 und 40 µm oder zwischen 50 und 150 µm beobachtet wird. Porengrößen im Bereich von 0,2 bis 5 µm bestimmt man am besten mittels Hg-Druck-Porosimetrie, während Porengrößen von ≥ 10 µm optisch mit Hilfe von Schliffbildern gemessen werden können.

Aufgrund der chemischen Zusammensetzung des erfindungsgemäßen Gegenstandes, ist eine hohe Temperaturbeständigkeit, hohe Korrosionsbeständigkeit und eine gute Verträglichkeit mit den umgebenden Medien gegeben. Der Wirtschaftlichkeit wird durch hohe Verfügbarkeit und niedrigen Preis der eingesetzten Rohstoffe Rechnung getragen. Ferner ist im erfindungsgemäßen Zusammensetzungsbereich der Trägerkeramik kein toxisches Gefährdungspotenzial bekannt. Die Festelektrolythochtemperaturbrennstoffzelle kann einzeln, nach keramischem Träger und aktiver Einheit getrennt, gefertigt und anschließend gasdicht miteinander verbunden werden. Alternativ kann die aktive Einheit in Form von mehreren Schichten auf den erfindungsgemäßen keramischen Träger aufgebracht werden und gegebenenfalls bei Temperaturen zwischen 1300 °C und 1800 °C gemeinsam gesintert werden.

Durch die nachfolgenden Ausführungsbeispiele soll die Erfindung für den Fachmann noch deutlicher offenbart werden, ohne jedoch auf die konkret dargestellten Ausführungsformen beschränkt zu sein.

### Beispiel 1

Als Rohstoffe für ein erfindungsgemäßes Trägermaterial wurden Aluminiumoxid mit einer chemischen Reinheit von 99% und Sintermagnesia enthaltend 95,4 Gew.-% MgO, 2,2 Gew.-% SiO₂, 1,6 Gew.-% CaO und 0,8 Gew.-% Fe₂O₃ verwendet, die eine Korngröße d50 von 25 µm besaßen.

70 Gewichtsteile Sintermagnesia und 30 Gewichtsteile Aluminiumoxid wurden mit 2 Gewichtsteilen Cellulose, 20 Gewichtsteilen Stärke und 23 Gewichtsteilen Wasser in einem Kneter homogen vermischt. Die Mischung wurde mittels eines Extruders zu zylindrischen Stäben verarbeitet. Die zylindrischen Stäbe wurden getrocknet und bei einer Temperatur von 1600 °C über eine Zeitspanne von 3 Stunden gesintert. Die aus den zylindrischen Stäben so erhaltenen Formteile wiesen folgende physikalische Eigenschaften auf:

| | | |
|---|---|---|
| Thermischer Ausdehnungskoeffizient | 10,9·10⁻⁶ | K⁻¹ |
| offene Porosität | 53 | % |
| Biegefestigkeit | 24 | MPa |

Das in Beispiel 1 beschriebene Trägermaterial wurde zu planaren Trägerelementen verarbeitet. Mittels einer Glasur wurde eine ZrO₂-Schicht, die ebenso einen angepaßten thermischen Ausdehnungskoeffizienten besitzt, bei einer Temperatur von 1380 °C rißfrei mit dem Trägerelement verbunden.

### Beispiel 2 (Vergleichsbeispiel)

Eine Mischung von 33 Gewichtsteilen MgO, eingebracht als Mg(OH)₂ enthaltend zusätzlich 0,6 Gew.-% SiO₂, 0,7 Gew.-% CaO und 0,22 Gew.-% Fe₂O₃, und 67 Gewichtsteilen Al₂O₃ mit einer chemischen Reinheit von 99 % wird zusammen mit weiteren 2 Gewichtsteilen Cellulose, 20 Gewichtsteilen Stärke und 24 Gewichtsteilen Wasser in einem Kneter homogen vermischt. Die Gesamtmischung wird sodann wie in Beispiel 1 zu Stäben extrudiert, getrocknet und über eine Zeitdauer von 3 Stunden bei einer Temperatur von 1600 °C gesintert.

An zylindrischen Formteilen hergestellt nach Beispiel 2 wurden folgende physikalische Eigenschaften gemessen:

| | | |
|---|---|---|
| Thermischer Ausdehnungskoeffizient: | 8,6·10⁻⁶ | K⁻¹ |
| offene Porosität | 40 | % |
| Biegefestigkeit | 35 | MPa |

Probekörper hergestellt nach Beispiel 2 zeigten nach 24 Stunden deutliche Risse, verursacht durch Feuchtigkeit, und ließen sich deshalb für den erfindungsgemäßen Einsatzzweck nicht mehr verwenden.

## Patentansprüche

1. Brennstoffzellenträger, der aus einer Keramik mit einer Zusammensetzung von 35 bis 80 Gew.-% MgO, 20 bis 65 Gew.-% Al₂O₃ und 0 bis 15 Gew.-% Verunreinigungen und/oder weiterer anorganischer Zuschlagstoffe aufgebaut ist, der einen thermischen Ausdehnungskoeffizienten im Bereich von 9 bis 13·10⁻⁶ K⁻¹, gemessen in einem Temperaturbereich von 20 bis 1000 °C, und eine offene Porosität von 53 bis 80 % besitzt und der Porenverteilungshäufigkeitsmaxima zwischen 0,2 und 5 µm, zwischen 10 und 40 µm und/oder zwischen 50 und 150 µm aufweist.

2. Brennstoffzellenträger nach Anspruch 1, dadurch gekennzeichnet, daß er aus einem Rohstoff mit einem mittleren Korndurchmesser d50 von kleiner 50 µm, insbesondere von kleiner 10 µm, hergestellt ist.

3. Brennstoffzellenträger nach Anspruch 1 oder 2, dadurch gekennzeichnet, daß er in planarer Bauweise vorliegt.

4. Brennstoffzellenträger nach Anspruch 1 oder 2, dadurch gekennzeichnet, daß er in zylindrischer Bauweise vorliegt.

5. Festelektrolythochtemperaturbrennstoffzelle umfassend wenigstens eine aktive Einheit und wenigstens einen Träger nach einem der Ansprüche 1 bis 4, wobei die aktive Einheit aus einer Festelektrolytschicht aufgebaut ist, die auf der Anodenseite mit einer Schicht aus einem ternären Gemisch aus Nickel, Zirkondioxid und Cer belegt ist und auf der Kathodenseite bevorzugt mit einer strontiumdotierten Schicht aus LaMnO₃.

6. Verfahren zum Herstellen einer Brennstoffzelle nach Anspruch 5, bei dem die aktive Einheit zunächst in Form von mehreren Einzelschichten auf eine Trägerschicht aufgebracht wird und bei dem dann alle Schichten gemeinsam bei einer Temperatur im Bereich von 1300 bis 1800 °C gesintert werden.

7. Verfahren zum Herstellen einer Brennstoffzelle nach Anspruch 5, bei dem ein Träger nach einem der Ansprüche 1 bis 4 zunächst einzeln gefertigt und in einem nachfolgenden Verfahrensschritt mit einer getrennt gefertigten aktiven Einheit verbunden wird.

## Claims

1. A fuel cell support made of a ceramic comprising from 35 to 80 % by weight of MgO, from 20 to 65 % by weight of Al₂O₃ and from 0 to 15 % by weight of impurities and/or further inorganic additives and which has a coefficient of thermal expansion in the range from 9 to 13 × 10⁻⁶ K⁻¹, measured in a temperature range from 20 to 1000°C, and an open porosity of from 53 to 80 % and which has pore distribution frequency maxima between 0.2 and 5 µm, between 10 and 40 µm and/or between 50 and 150 µm.

2. The fuel cell support as claimed in claim 1, which is produced from a raw material having an average particle diameter d₅₀ of less than 50 µm, in particular of less than 10 µm.

3. The fuel cell support as claimed in claim 1 or 2, wherein the support has a planar construction.

4. The fuel cell support as claimed in claim 1 or 2, wherein the support has a cylindrical construction.

5. A solid electrolyte high temperature fuel cell comprising at least one active unit and at least one support as claimed in any of claims 1 to 4, where the active unit is composed of a solid electrolyte layer which is coated on the anode side with a layer of a ternary mixture of nickel, zirconium dioxide and cerium and on the cathode side preferably with a strontium-doped layer of LaMnO₃.

6. A process for producing a fuel cell as claimed in claim 5, in which the active unit is first applied to a support layer in the form of a plurality of individual layers and in which all the layers are then sintered together at a temperature in the range from 1300 to 1800°C.

7. A process for producing a fuel cell as claimed in claim 5, in which a support as claimed in any of claims 1 to 4 is first manufactured individually and connected to a separately manufactured active unit in a subsequent process step.

## Revendications

1. Support de pile à combustible qui est constitué d'une céramique ayant une composition de 35 à 80 % en poids de MgO, de 20 à 65 % en poids de Al₂O₃ et de 0 à 15 % en poids d'impuretés et/ou d'autres agrégats inorganiques, qui possède un coefficient de dilatation thermique compris dans une plage de 9 à 13·10⁻⁶K⁻¹, mesuré dans une plage de température de 20 à 1000° C et une porosité ouverte de 53 à 80 %, et qui présente des maxima de densité de répartition de pores compris entre 0,2 et 5 µm, entre 10 et 40 µm et/ou entre 50 et 150 µm.

2. Support de pile à combustible selon la revendication 1, caractérisé en ce qu'il est fabriqué d'une matière première ayant un diamètre de grain moyen d50 inférieur à 50 µm, en particulier inférieur 10 µm.

3. Support de pile à combustible selon la revendication 1 ou 2, caractérisé en ce qu'il présente une forme de construction planaire.

4. Support de pile à combustible selon la revendication 1 ou 2, caractérisé en ce qu'il présente une forme de construction cylindrique.

5. Pile à combustible à haute température, à électrolyte solide, comprenant au moins une unité active et au moins un support selon l'une des revendications 1 à 4, l'unité active étant constituée d'une couche d'électrolyte solide qui est recouverte sur le côté de l'anode d'une couche d'un mélange ternaire de nickel, de dioxyde de zircon et de cérium et, sur le côté de la cathode, de préférence, d'une couche de LaMnO₃ dotée de strontium.

6. Procédé de fabrication d'une pile à combustible selon la revendication 5, dans lequel l'unité active est appliquée tout d'abord sous forme de plusieurs couches individuelles sur une couche de support et dans lequel ensuite toutes les couches sont frittées ensemble à une température comprise dans une plage de 1300° à 1800° C.

7. Procédé de fabrication d'une pile à combustible selon la revendication 5, dans lequel un support selon l'une des revendications 1 à 4 est tout d'abord fabriqué individuellement et est, dans une opération de base suivante, relié à une unité active fabriquée séparément.
